(19) Europäisches Patentamt
European Patent Office
Office européen des brevets

(11) EP 1 723 409 B1

(12) EUROPÄISCHE PATENTSCHRIFT

(45) Veröffentlichungstag und Bekanntmachung des Hinweises auf die Patenterteilung:
04.05.2011 Patentblatt 2011/18

(21) Anmeldenummer: 05743195.9

(22) Anmeldetag: 23.02.2005

(51) Int Cl.:
*G01N 27/90* (2006.01)

(86) Internationale Anmeldenummer:
PCT/EP2005/001888

(87) Internationale Veröffentlichungsnummer:
WO 2005/085832 (15.09.2005 Gazette 2005/37)

(54) **VORRICHTUNG ZUR ZERSTÖRUNGSFREIEN ERFASSUNG VON TIEFEN-DEFEKTEN IN ELEKTRISCH LEITENDEN MATERIALIEN**

DEVICE FOR DETECTING DEEP DEFECTS IN ELECTRICALLY CONDUCTIVE MATERIALS IN A NON-DESTRUCTIVE MANNER

DISPOSITIF DE DETECTION NON DESTRUCTRICE DE DEFAUTS PROFONDS DANS DES MATERIAUX ELECTROCONDUCTEURS

(84) Benannte Vertragsstaaten:
CH DE GB IT LI

(30) Priorität: 08.03.2004 EP 04005462

(43) Veröffentlichungstag der Anmeldung:
22.11.2006 Patentblatt 2006/47

(73) Patentinhaber: SIEMENS AKTIENGESELLSCHAFT
80333 München (DE)

(72) Erfinder:
• DAALMANS, Gabriel
91315 Höchstadt (DE)
• STECK, Martin
89555 Steinheim (DE)

(56) Entgegenhaltungen:
DE-A- 19 945 944        DE-A1- 4 318 716
US-A- 4 924 293         US-A- 5 243 547
US-A- 5 842 986         US-A- 6 031 273
US-A1- 2002 060 565     US-B1- 6 452 384

• "Introduction to NVE GMR Sensors" NVE CORPORATION, [Online] 15. November 2002 (2002-11-15), XP002329240 Gefunden im Internet: URL:http://www.megatron.fr/composants/pdf/pdfgmr/Sensor_Catalog_111402-Introduction_to_GMR_Sensors1.pdf> [gefunden am 2005-05-24]
• INDECK R S ET AL: "A MAGNETORESISTIVE GRADIOMETER" IEEE TRANSACTIONS ON MAGNETICS, IEEE INC. NEW YORK, US, Bd. 24, Nr. 6, 1. November 1988 (1988-11-01), Seiten 2617-2619, XP000031789 ISSN: 0018-9464
• TREUTLER C P O: "Magnetic sensors for automotive applications" SENSORS AND ACTUATORS A, ELSEVIER SEQUOIA S.A., LAUSANNE, CH, Bd. 91, Nr. 1-2, 5. Juni 2001 (2001-06-05), Seiten 2-6, XP004239165 ISSN: 0924-4247

**Beschreibung**

Die Erfindung bezieht sich auf eine Vorrichtung zur zerstörungsfreien Erfassung von tief liegenden und oberflächennahen Defekten in elektrisch leitenden Materialien mit einer Erregereinrichtung mit Induktionsspulen zur Erzeugung niederfrequenter Wirbelströme im Material und mit einer Empfangseinrichtung für die durch die Defekte veränderten Magnetfelder der Wirbelströme.

Die klassische Lösung des Problems der zerstörungsfreien Erfassung von tiefen Defekten in elektrisch leitenden Materialien ist die Anwendung von Niederfrequenz-Wirbelstromverfahren mit Induktionsspulen zum Erregen und zum Detektieren. Dieses Verfahren zeigt eine Empfindlichkeit auf, die stark abhängig von der Erregerfrequenz ist und bei den niedrigen Frequenzen richtiggehend einbricht. Die Schwäche des Sensors wird üblicherweise dadurch zu kompensieren versucht, dass man den Erregerstrom erhöht. Beim Stand der Technik wurde kein besonderer Wert gelegt auf das Verhindern von induktiven Signalen, die besonders bei den höheren Frequenzen (kHz-Bereich) die Magnetfeldsignale leicht übertreffen können. $V_{Det} = V(B) + V(\delta B/\delta t)$   mit $V(B) < V(\delta B/\delta t)$ für höhere Frequenzen.

Die induktiven Signale sind aus zwei Gründen sehr unangenehm. Erstens kann es zu zusätzlichen Abhebesignalen kommen, die als Defektsignal wahrgenommen werden und zweitens ist es nicht mehr möglich, eine quantitative zerstörungsfreie Werkstoffprüfung durchzuführen, da Amplitude und Phase der Detektorspannung verfälscht sind.

US-6 452 384 B1 offenbart eine Vorrichtung zur zerstörungsfreien Erfassung von Defekten in elektrisch leitenden Materialien, mit einer Erregereinrichtung mit Induktionsspulen und mit einer Empfangseinrichtung.

DE-4318716 offenbart einen magnetfeldsensor in form einer Brückenschaltung von Brückenwideständen aus magnetoresistiven Schrichtstreifen.

Der Erfindung liegt daher die Aufgabe zugrunde, eine Vorrichtung der eingangs beschriebenen Art dahingehend weiterzubilden, dass sie vorteilhaft über einen größeren Frequenzbereich eingesetzt werden kann und somit zum einen tiefe verdeckte Fehler und Oberflächenfehler detektieren kann, zum anderen ein quantitativer Zusammenhang zwischen Detektorsignal und Defektgröße und Tiefe ermöglicht wird und dass schließlich auch in elektromagnetisch gestörter Umgebung die Qualität des Sensors voll genutzt werden kann.

Zur Lösung dieser Aufgabe ist erfindungsgemäß vorgesehen, dass die Empfangseinrichtung Gradiometer-Magnetfeldsensoren in integrierter Brückenschaltung enthält, wobei in Weiterbildung der Erfindung die integrierte Brückenschaltung eine gefaltete Schleifenfläche aufweist.

Durch den Einsatz von Gradiometer-Magnetfeldsensoren, wobei hierfür magnetoresistive Wandler beliebiger Bauart verwendet werden können, ergibt sich zwar ein geringeres Signal als bei den bisher verwendeten Induktionsspulen, dafür aber ein besserer Signalrauschabstand. Durch die integrierte Brückenschaltung, bei der quasi die eine Hälfte der Brücke in die andere eingeklappt ist, sodass praktisch keine nennenswerte Schleifenfläche mehr verbleibt, in der durch Wechsel der Magnetfelder Spannungen induziert werden könnten, die dieses Messergebnis verfälschen, wird die erfindungsgemäße Vorrichtung in hohem Maße unabhängig von äußeren Störfeldern, sodass neben sehr tiefen Niederfrequenzen auch höhere Frequenzen zum Einsatz kommen können.

Um mit einer Wirbelstrommethode Aussagen aus tiefen Werkstoffbereichen, also aus Tiefen größer 1 mm, zu bekommen, muss man sehr starke Wirbelstromfelder in der Tiefe des Bauteils erzeugen, was aber physikalisch durch den Skin-Effekt behindert wird. Tiefe Frequenzen dringen sehr tief in den Werkstoff ein, zeigen aber rein physikalisch eine schlechte Ortsauflösung und damit ist die nachweisbare Fehlergröße begrenzt. Höhere Frequenzen zeigen eine bessere Ortsauflösung aber mit steigender Frequenz wird die Messempfindlichkeit durch elektromagnetische Störeffekte immer mehr beschränkt.

Durch die erfindungsgemäße Vorrichtung lässt sich nun die Messempfindlichkeit dadurch steigern, dass elektromagnetische Störeffekte weitestgehend minimiert werden und es damit gelingt, auch mit höheren Frequenzen in tiefen Werkstoffbereichen zu arbeiten, also in Tiefen von ca. 10 mm.

Durch den vorstehend bereits angesprochenen erfindungsgemäßen Ansatzes, bei der die integrierte Brückenschaltung zusätzlich eine gefaltete Schleifenfläche aufweist, erhält man eine Anordnung, bei der die sehr geringe übrig bleibende und möglicherweise zur Induktion von Störspannungen zur Verfügung stehende Schleifenfläche in zwei Teile aufgeteilt ist, die gegenläufig durchflossen werden, sodass sich derartige induzierte Spannungen weitgehend aufheben.

Gemäß einem weiteren Merkmal der vorliegenden Erfindung kann die Brückenschaltung der Magnetfeldsensoren, deren Basislänge nicht größer als die maximale Prüftiefe sein sollte, auf einem kleinbauenden Chip angeordnet sein, der seinerseits wiederum bevorzugt auf einer mit einem Anschluss-Stecker versehenen Platine eines Wirbelstrommesskopfs angeordnet werden kann, wobei die Chipzuleitungen durch eine metallisierte Unterseite der Platine induktionsarm geschirmt sein können. Durch diese Maßnahme wird auch das mögliche Störpotential im Bereich der Zuleitungen ausgeschaltet, da es ja nicht alleine genügt, dass man Störspannungen am eigentlichen Messteil, also der integrierten Brückenschaltung aus Gradiometer-Magnetfeldsensoren vermeidet, sondern letztendlich würden in den Zuleitungen auftretende Störungen das Ergebnis in gleicher Weise verfälschen.

Die erfindungsgemäße Chip-Platine kann dabei in unterschiedlichen Niederfrequenzmessköpfen eingesetzt werden und zwar einmal derart, dass die Chip-Platine in eine umlaufende, das Erregerfeld erzeugende Induktionsspule ragt und dabei etwas in Richtung auf das zu untersuchende Werkstück aus dieser Induktionsspule nach vorne vorsteht. Zum anderen können die Induktionsspulen auch auf einem Joch angeordnet sein, zwischen dessen Schenkeln die Chip-Platine so einragt, dass das Erregerfeld im Wesentlichen senkrecht zum Chip verläuft. Diese Variante ist besonders geeignet für eine Prüfung bei sehr hoher Auflösung, da hierbei keine Magnetfeldkomponente des Erregerfeldes in einer Richtung parallel zur Chipfläche vorhanden ist, sodass der Chip das Erregerfeld quasi überhaupt nicht sieht und dadurch nicht direkt beeinflusst werden kann.

Weitere Vorteile, Merkmale und Einzelheiten der Erfindung ergeben sich aus der nachfolgenden Beschreibung einiger Ausführungsbeispiels sowie anhand der Zeichnung. Dabei zeigen:

Fig. 1 eine Ansicht eines Chips mit einer darauf angeord- neten integrierten, nicht erfindungsgemäßen Brückenschaltung aus Gradio- meter-Magnetfeldsensoren,

Fig. 2 eine Ausführungsform der Anordnung nach Fig. 1 mit erfindungsgemäßer, gefalteter Schleifenflä- che,

Fig. 3 eine schematische Anordnung eines Chips gemäß der Fig. 2 auf einer Chip-Platine mit Anschluss- Stecker und abgeschirmten Zuleitungen als Drauf- und Vorderansicht,

Fig. 4 einen Niederfrequenzmesskopf, wobei zwei unter- schiedliche Varianten für die Erregung A und B an- gedeutet sind und

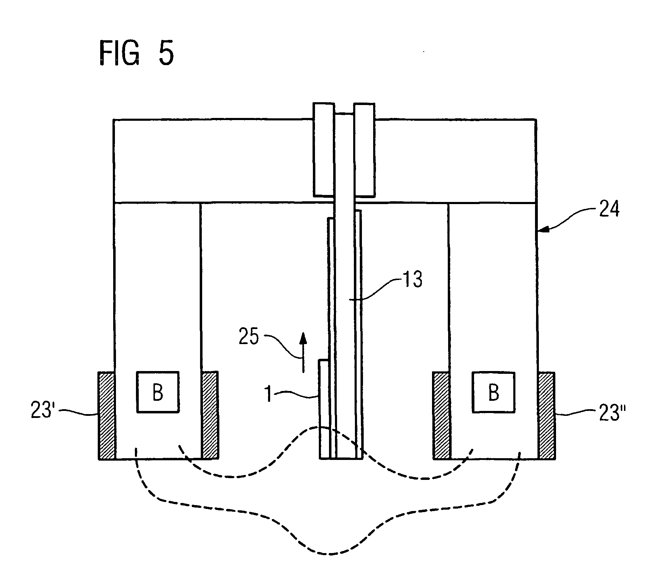

Fig. 5 eine um 90° gedrehte Seitenansicht der Anordnung nach Fig. 4, bei der Variante B der Erregung des Werkstücks mit einem Joch.

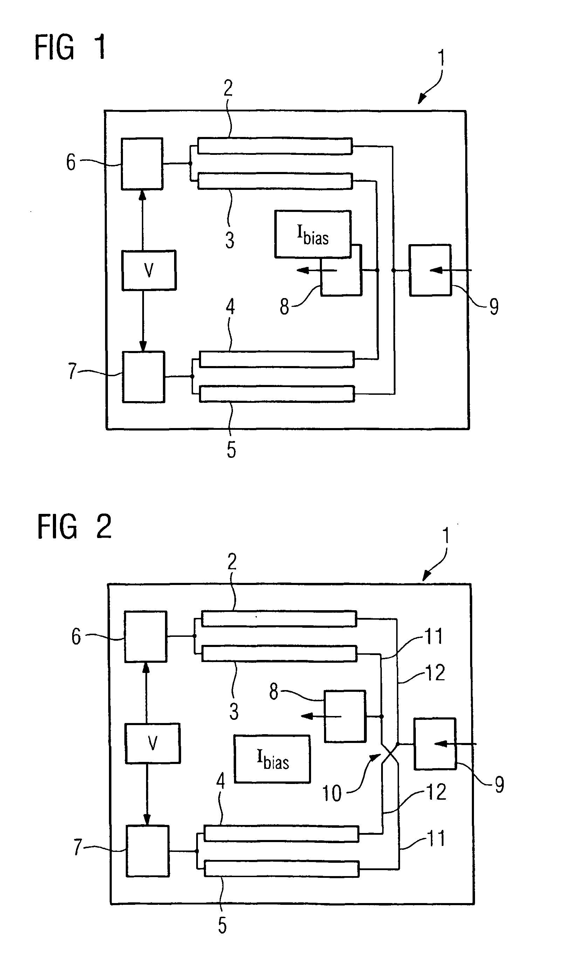

In Fig. 1 erkennt man einen Chip 1, auf dem eine integrierte Brückenschaltung aus vier magnetempfindlichen Widerständen 2 bis 5 angeordnet ist, wobei bei 6 und 7 Kontaktflächen zum Anschließen der Abnahmeleitungen für die sich ergebende Mess-Spannung V und bei 8 und 9 entsprechende Leiteranschlüsse zum Einspeisen eines Versorgungsstroms $I_{Bias}$ in die Wandlerbrücke angedeutet sind.

Die Brückenschaltung mit den Chip-Zuleitungen (14, 15, 16, 17) ist mit derart geringer Induktivität ausgestaltet, dass die Signalausgangsspannung der Brückenschaltung im Wesentlichen proportional zum Magnetfeld der Wirbelströme und nicht deren Induktion ist.

Das erfindungsgemäße Merkmale der gefalteten Schleifunfläche ist in der Fig. 1 nicht abgebildet.

Bei der Anordnung nach Fig. 2 ist die Schleifenfläche erfindungsgemäß gefaltet (siehe Kreuzungspunkt 10 der hier selbstverständlich isoliert übereinander geführten Verbindungsleitungen 11 und 12).

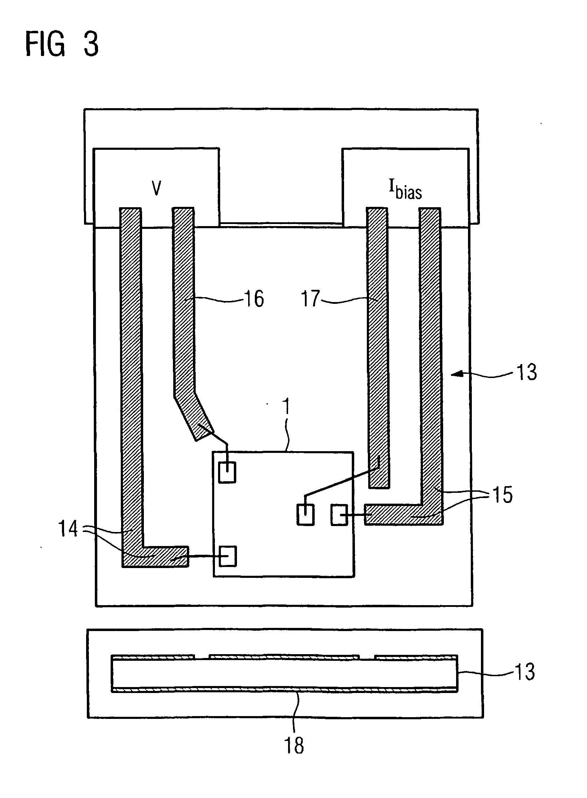

Eine solche induktionsarme Wandlerbrücke gemäß der Figur 2 wird unter Vermeidung von wesentlichen induktiven Beiträgen in einem Wirbelstrom-Messkopf integriert. Dazu wird der Chip 1 (vgl. insbesondere Fig. 3) auf einer Chip-Platine 13 montiert, die neben den Zuleitungen 14 bis 17 auf der Chipseite eine elektrisch leitende Beschichtung 18 auf der Unterseite aufweist, wodurch gewährleistet ist, dass die Chip-Zuleitungen 14 bis 17 für Strom und Spannung induktionsarm sind. An das obere Ende der Platine 13 in Fig. 3 wird ein Stecker angesteckt.

Die Erregereinrichtung zur Erregung der Wirbelströme ist derart gestaltet und angeordnet, dass bei Anwendung auf fehlerfreiem Material die Erregereinrichtung keine Signalspannung erzeugt.

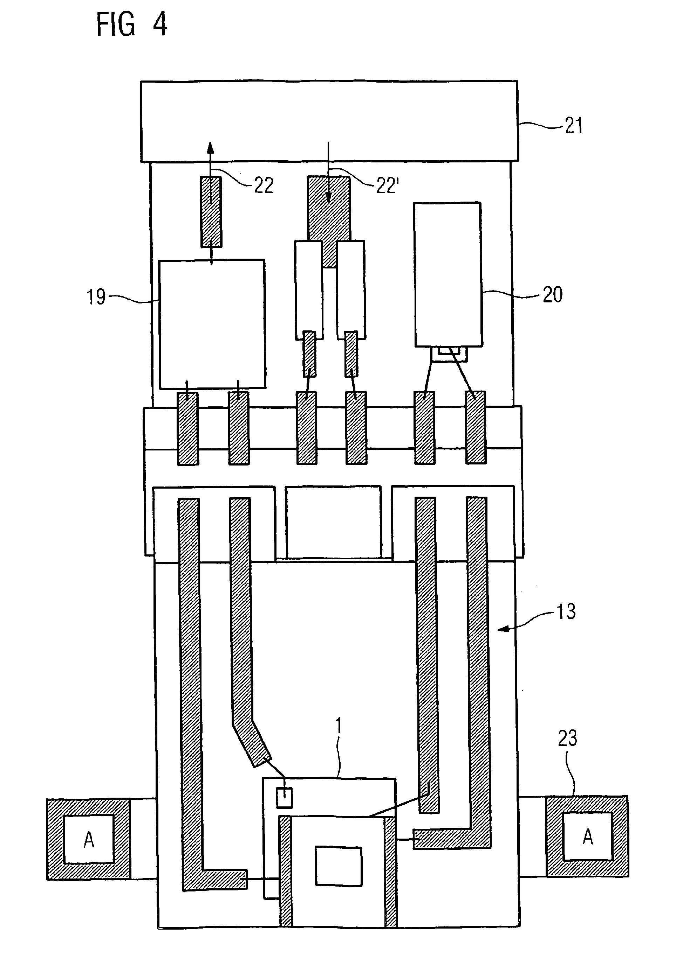

Dies ist bspw. bei der Ausführungsform der Fall, wie sie in Fig. 4 dargestellt ist, wobei die Platine mit dem Chip identisch der Ausbildung nach Fig. 3 ist, wo zusätzlich noch ein Teil der Ansteuerschaltung mit einem Vorverstärker 19, einer Batterie 20 und einem Kabelstecker 21 zum Messgerät angedeutet ist. Der Pfeil 22' deutet den Erregerstrom an, während der Pfeil 22 die Signalausgangsspannung schematisch wiedergibt.

Die bei A dargestellte Variante zur Erregung der Wirbelströme im zu untersuchenden Material umfasst eine umlaufende Spule 23, durch die der auf der Chip-Platine 13 angeordnete Chip 1 nach vorne durchragt, dabei ist der Wandler dem Erregerfeld voll ausgesetzt. Durch die erfindungsgemäße Ausgestaltung der Brückenschaltung ist aber gewährleistet, dass die Erregung in der Brücke keinen wesentlichen Gradientenbeitrag erzeugt.

Noch geeigneter und weniger störanfällig ist die Variante B, bei der die Induktionsspulen 23' und 23 " auf einem Joch 24 angeordnet sind, in das der auf der Chip-Platine 13 angeordnete Chip 1 so einragt, dass keine Magnetfeldkomponente in Richtung des Pfeils 25 gegeben ist und somit der Chip das Erregerfeld, das gestrichelt eingezeichnet ist, praktisch gar nicht sieht.

Durch die erfindungsgemäße Ausbildung ergeben sich eine ganze Reihe von Vorteilen. Zum einen kann die Messvorrichtung nicht nur bei den kleinsten Frequenzen sondern auch im Frequenzbereich von 10 Hz bis 10 kHz eingesetzt werden, was eine in der Tiefe auflösende Betrachtung des Fehlers erlaubt. Zum anderen ermöglicht die Messvorrichtung eine quantitative Analyse der Abmessungen des Fehlers. Und zum dritten schließlich kann das erfindungsgemäße Messverfahren auch unter Widrigen Bedingungen durchgeführt werden, da äußere Störfelder die Messgenauigkeit praktisch nicht beeinträchtigen.

**Patentansprüche**

1. Vorrichtung zur zerstörungsfreien Erfassung von tief liegenden Defekten in elektrisch leitenden Materialien mit einer Erregereinrichtung mit Induktionsspulen zur Erzeugung niederfrequenter Wirbelströme im Material und mit einer Empfangseinrichtung für die durch die Defekte veränderten Magnetfelder der Wirbelströme, **dadurch gekennzeichnet, dass** die Empfangseinrichtung magnetoresistive Gradiometer-Magnetfeldsensoren (2-5) mit integrierter Brückenschaltung enthält, dass die Brückenschaltung mit den Chip-Zuleitungen (14, 15, 16, 17) mit derart geringer Induktivität ausgestaltet ist, dass die Signalausgangsspannung der Brückenschaltung im Wesentlichen proportional zum Magnetfeld der Wirbelströme und nicht deren Induktion ist, und dass die Erregereinrichtung zur Erregung der Wirbelströme derart gestaltet und angeordnet ist, dass bei Anwendung auf fehlerfreiem Material die Erregereinrichtung keine Signalausgangsspannung erzeugt, wobei die integrierte Brückenschaltung eine gefaltete Schleifenfläche aufweist.

2. Vorrichtung nach Anspruch 1, **dadurch gekennzeichnet, dass** die Brückenschaltung der Magnetfeldsensoren (2-5), deren Basislänge nicht größer ist als die maximale Prüftiefe, auf einem kleinbauenden Chip (1) angeordnet ist.

3. Vorrichtung nach Anspruch 2, **dadurch gekennzeichnet, dass** der Chip (1) auf einer mit einem Anschluss-Stecker versehenen Chip-Platine (13) eines Wirbelstrommesskopfs angeordnet ist, wobei die Chipzuleitungen (14-17) durch eine metallisierte Beschichtung (18) der Unterseite der Chip-Platine (13) induktionsarm geschirmt sind.

4. Vorrichtung nach Anspruch 3, **dadurch gekennzeichnet, dass** die Chip-Platine (13) in eine umlaufende das Erregerfeld erzeugende Induktionsspule (23) ragt.

5. Vorrichtung nach Anspruch 3, **dadurch gekennzeichnet, dass** die Induktionsspulen (23', 23 ") auf einem Joch (24) angeordnet sind, zwischen dessen Schenkel die Chip-Platine (13) so einragt, dass das Erregerfeld im Wesentlichen senkrecht zum Chip (1) verläuft.

**Claims**

1. Device for detecting deep-lying defects in electrically conductive materials in a nondestructive manner, having an exciter device with induction coils for producing low-frequency eddy currents in the material, and having a reception device for the magnetic fields of the eddy currents, which fields have been changed by the defects, **characterized in that** the reception device contains magnetoresistive gradiometer magnetic-field sensors (2-5) with an integrated bridge circuit, **in that** the bridge circuit with the chip feed lines (14, 15, 16, 17) is designed to have such a low inductance that the signal output voltage of the bridge circuit is essentially proportional to the magnetic field of the eddy currents and not their induction, and **in that** the exciter device for exciting the eddy currents is designed and arranged such that, when applied to fault-free material, the exciter device does not produce a signal output voltage, the integrated bridge circuit having a folded loop area.

2. Device according to Claim 1,

**characterized in that**
the bridge circuit of the magnetic-field sensors (2-5), whose basic length is not greater than the maximum test depth, is arranged on a compact chip (1).

3. Device according to Claim 2,
**characterized in that**
the chip (1) is arranged on a chip board (13), which is provided with a connection plug, of an eddy-current measuring head, the chip feed lines (14-17) being shielded by a metallized coating (18) of the underside of the chip board (13), with little induction.

4. Device according to Claim 3,
**characterized in that**
the chip board (13) protrudes into a circumferential induction coil (23) producing the exciter field.

5. Device according to Claim 3,
**characterized in that**
the induction coils (23', 23" ) are arranged on a yoke (24), between whose limbs the chip board (13) protrudes such that the exciter field runs essentially at right angles to the chip (1).

**Revendications**

1. Système de détection sans destruction de défauts profonds de matériaux conducteurs de l'électricité, comprenant un dispositif d'excitation ayant des bobines d'induction pour la production de courants de Foucault à basse fréquence dans le matériau et comprenant un dispositif de réception des champs magnétiques des courants de Foucault modifiés par les défauts, **caractérisé en ce que**
le dispositif de réception comporte des capteurs ( 2 à 5 ) de champ magnétique magnétorésistifs à gradiomètre à circuit en pont intégré,
**en ce que** le circuit en pont est conformé en ayant les lignes ( 14, 15, 16,17 ) d'entrée de puce ayant une inductance petite de sorte que la tension de sortie du signal du circuit en pont soit sensiblement proportionnelle au champ magnétique des courants de Foucault et non à leur induction, et
**en ce que** le dispositif d'excitation est conformé et disposé pour exciter les courants de Foucault de manière à ce que, lors de l'application à du matériau sans défaut, le dispositif d'excitation ne produise pas de tension de sortie du signal, dans lequel le circuit en pont intégré comporte une surface en boucle pliée.

2. Système suivant la revendication 1, **caractérisé en ce que** le circuit en pont des capteurs ( 2 à 5 ) de champ magnétique, dont la longueur de base n'est pas plus grande que la profondeur maximum de vérification, est disposé sur une puce ( 1 ) petite.

3. Système suivant la revendication 2, **caractérisé en ce que** la puce ( 1 ) est disposée sur une platine ( 13 ) de puce d'une tête de mesure de courant de Foucault, la platine étant munie d'un connecteur de raccordement, dans lequel les lignes ( 14 à 17 ) d'entrée de la puce sont blindées, en ayant peu d'induction, par un revêtement ( 18 ) métallisé de la face inférieure de la platine ( 13 ) de puce.

4. Système suivant la revendication 3, **caractérisé en ce que** la platine ( 13 ) de puce pénètre dans une bobine ( 23 ) d'induction faisant le tour et produisant le champ d'excitation.

5. Système suivant la revendication 3, **caractérisé en ce que** les bobines ( 23', 23" ) d'induction sont disposées sur une culasse ( 24 ) entre les branches de laquelle la platine ( 13 ) de puce pénètre de manière à ce que le champ d'excitation soit sensiblement perpendiculaire à la puce ( 1 ) .

## FIG 1

## FIG 2

# FIG 3

V

I_{bias}

16

17

13

1

15

14

13

18

FIG 4

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6452384 B1
- DE 4318716